# EUROPEAN PATENT APPLICATION

(11) **EP 1 517 216 A2**
(43) Date of publication of application: **23.03.2005**
(21) Application number: 04254925.3
(22) Date of filing: 17.08.2004
(51) Int. Cl.: G06F 1/00

(54) **Method of granting drm license to support plural devices**

(30) Priority: 18.09.2003 KR 2003064861
(71) Applicant: Samsung Electronics Co., Ltd., Suwon-si, Gyeonggi-do 442-742 (KR)
(72) Inventor: Lee, Byung-rae, Suji-eup Yongin-si Gyeonggi-do (KR); Chang, Kyung-ah, Seongbuk-gu Seoul (KR)
(74) Representative: Davies, Robert Ean

(57) **Abstract**

A method is provided for granting a digital rights management license between a server and a plurality of devices. Content is transmitted from the server to at least one of the plurality of devices, wherein the content contains license information that includes identifiers for at least two of the plurality of devices capable of reproducing the content respectively. The identifiers included in the license information are extracted from the received content, and if the extracted identifier corresponds to an own identifier of the device, the content is reproduced by the device.

## Description

The present invention relates to Digital Rights Management (DRM) licenses, and more particularly, but not exclusively, to a method of granting a DRM license to support a plurality of devices capable of processing digital information.

Generally, according to conventional DRM techniques, content can be reproduced through only one device, depending on the content purchased by a consumer and the details of a license for the content.

In other words, in conventional DRM environments, consumers are provided with content by content providers and purchase licenses for the content. At this time, each of the licenses is adapted to be effective for only one device. In this regard, there are a device binding scheme and a user binding scheme.

In the device binding scheme, a license purchased by consumers depends on devices and only a relevant device is authorized to reproduce the content. On the contrary, in the user binding scheme, licenses purchased by consumers depend on users, and for example, there is a scheme using subscriber identification module (SIM) cards or smart cards.

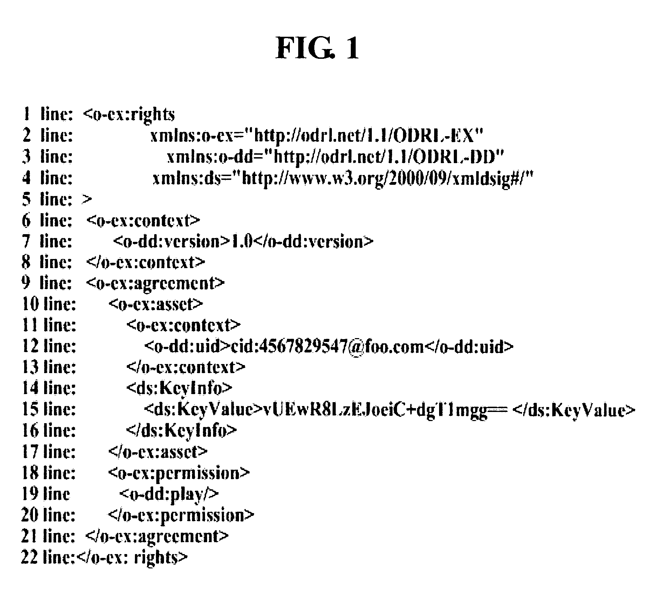

FIG. 1 is an exemplary view illustrating the structure of a conventional DRM license that is expressed in Extensible Markup Language (XML).

Lines 1 to 5 represent the beginning of the DRM license, and describe information regarding XML namespace for providing information on interpretation of XML.

Lines 6 to 8 describe information regarding the version of a DRM system to which the DRM license is applied.

Lines 9 to 21 contain content information and the details of the DRM license, and are expressed using <asset> and <permission> elements.

The <asset> element describes, in lines 11 to 13, an identifier of the content to which the DRM license is applied, and describes, in lines 14 to 16, information on a content encryption key (CEK) with which encrypted content can be decrypted.

The <permission> element describes, in lines 18 to 20, that content can be reproduced.

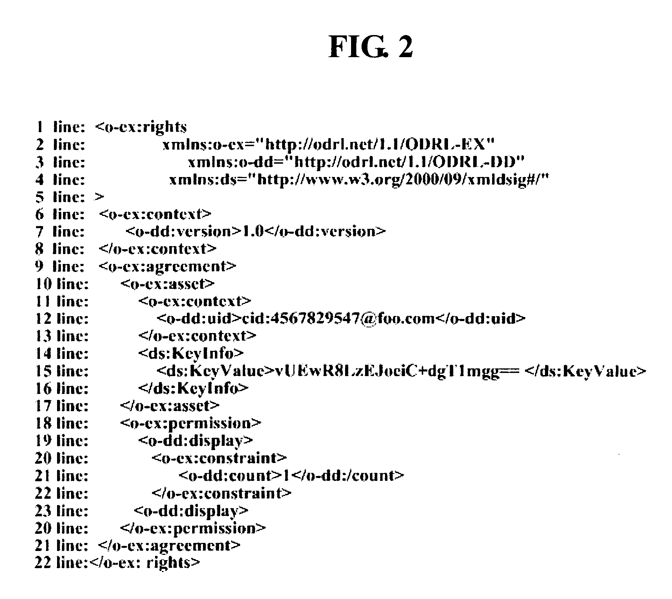

FIG. 2 is an exemplary view illustrating the structure of another conventional DRM license. Lines 19 to 23 describe that content can be reproduced, but only once. A <constraint> element in line 20 may include elements such as <interval>, <accumulated>, <start>, <end> and/or <count>.

The <interval> element represents a period of time for which the content can be used, and its start point is the time when the content is first used. For example, if the value of the <interval> element is expressed as '10d,' the content can be freely used for 10 days from a first use of the content.

The <accumulated> element represents a maximally accumulated time of the use of the content. For example, if the <accumulated> element has a value of '10h,' the total reproduction time of the content should not exceed 10 hours.

The <start> and <end> elements are described in pairs, and indicate that content can be freely used from the date specified in the <start> element to the date specified in the <end> element.

Heretofore, typical DRM techniques include Microsoft's DRM, Open Mobile Alliance (OMA) DRM, and the like. In such techniques, content is generally allowed to be reproduced through only one device to which a license is bound. Thus, there is inconvenience in that if a user possesses a plurality of devices, the user cannot reproduce portions of content on more than one of the devices, using the content and a license corresponding thereto.

According to the present invention, there is provided a method as set forth in the appended claims. Preferred features of the invention will be apparent from the dependent claims and the description which follows.

According to an exemplary embodiment of the present invention, there is provided a license structure enabling reproduction of digital contents through a plurality of devices, and a method of reproducing digital content through plural devices using the license structure.

According to another exemplary embodiment of the present invention, there is provided a method of granting a digital rights management license between a server and a plurality of devices, comprising transmitting content from the server to at least one of the plurality of devices, the content containing license information that includes identifiers for two or more of the plurality of devices capable of reproducing the content respectively, extracting the identifiers included in the license information from the received content, and when the extracted identifier corresponds to an identifier of the device, reproducing the content by the device.

According to another exemplary embodiment of the present invention, there is provided a method of granting a digital rights management license between a server and a plurality of devices, comprising transmitting content from the server to at least one of the plurality of devices, the content containing license information that includes an identifier for identifying a logical domain to which two or more of the plurality of devices capable of reproducing the content belong extracting the identifiers included in the license information from the received content, and when the extracted identifier corresponds to an identifier of the logical domain to which a device intending to reproduce the content belongs, reproducing the content by the device.

According to another exemplary embodiment of the present invention, there is provided a method of granting a digital rights management license between a server and a plurality of devices, comprising transmitting content from the server to at least one of the plurality of devices, the content containing license information that includes information regarding a number of reproduction times of the content, extracting the information on the number of reproduction times included in the license information from the received content, when it is determined from the extracted information that the device intending to reproduce the content can reproduce the content, reproducing the received content by the device, and transmitting modified information on the number of reproduction times and the license from the device to other devices so that they can extract the modified information on the number of reproduction times and use the content.

According to another exemplary embodiment of the present invention, there is provided a method of granting a digital rights management license between a server and a plurality of devices, comprising transmitting content from the server to at least one of the plurality of devices, the content containing license information that includes information regarding a number of devices capable of reproducing the content, extracting the information on the number of devices included in the license information from the received content, when it is determined from the extracted information that the device intending to reproduce the content can reproduce the content, reproducing the received content by the device, and transmitting modified information on the number of devices and the license from the device to other devices so that they can extract the modified information on the number of devices and use the content.

According to another exemplary embodiment of the present invention, there is provided a method of granting a digital rights management license between a server and a plurality of devices, comprising receiving content and license information on the content by the server adapted to manage a logical domain to which two or more of the plurality of devices capable of reproducing the content belong verifying by the server the received license information, if one of the plurality of devices requests the content, and providing the requested content by the server to the device and updating status values of the license information, if it is verified that the license is a legitimate license.

According to another exemplary embodiment of the present invention, there is provided a method of granting a digital rights management license between a server and a plurality of devices, comprising receiving content and license information on the content by a server adapted to manage a logical domain to which two or more of the plurality of devices capable of reproducing the content belong, splitting the received license information into pieces of license information for the respective devices which belong to the logical domain, transmitting the pieces of license information and the received content to relevant one or more of the plurality of devices, and reproducing the content according to the received pieces of license information.

For a better understanding of the invention, and to show how embodiments of the same may be carried into effect, reference will now be made, by way of example, to the accompanying diagrammatic drawings in which:
FIG. 1 is an exemplary view illustrating the structure of a conventional DRM license;
FIG. 2 is an exemplary view illustrating the structure of another conventional DRM license;
FIG. 3A is an exemplary view illustrating a description of a plurality of device identifiers in the structure of a DRM license according to an exemplary embodiment of the present invention;
FIG. 3B is a flowchart illustrating an exemplary method of granting a DRM license by providing identifiers of devices capable of reproducing content according to an exemplary embodiment of the present invention;
FIG. 4A is an exemplary view illustrating a description of a specific domain identifier in the structure of a DRM license according to an exemplary embodiment of the present invention;
FIG. 4B is a flowchart illustrating an exemplary method of granting a DRM license by providing a domain identifier for identifying a domain incorporating a plurality of devices capable of reproducing content according to an exemplary embodiment of the present invention;
FIG. 4C is a flowchart illustrating an exemplary method of granting a DRM license by providing information regarding the number times the content can be reproduced according to an exemplary embodiment of the present invention;
FIG. 5A is an exemplary diagram showing management of a DRM license by a DRM server, according to an exemplary embodiment of the present invention;
FIG. 5B is a flowchart illustrating management of a DRM license by the DRM server according to an exemplary embodiment of the present invention;
FIG. 5C is a flowchart illustrating management of a DRM license by the DRM server according to another exemplary embodiment of the present invention;
FIG. 6A is an exemplary view illustrating the structure of a DRM license for limiting the number of devices authorized to reproduce contents, according to an exemplary embodiment of the present invention; and
FIG. 6B is a flowchart illustrating an exemplary method of granting a DRM license by providing information limiting the number of devices authorized to reproduce the content according to an exemplary embodiment of the present invention.

Hereinafter, methods of granting a DRM license to support a plurality of devices according to exemplary embodiments of the present invention will be described with reference to the accompanying drawings.

DRM licenses may be classified into two cases: a first case with varying status values and a second case with non-varying status values. In other words, if <start> and <end> elements are described, content can be used at any time during a relevant period of time specified by the elements. Thus, relevant status values do not vary. However, if there is a limitation on the number of use times of content, as in line 21 of FIG. 2, the relevant value varies whenever the content is used. The present invention will be described in connection with methods that can be applied to both the first case in which the status values of a DRM license vary and the second case in which the status values do not vary, as described above. In addition, the structure of a DRM license to be described later can be expressed in XML or implemented with a separate object or data structure depending on the DRM environment.

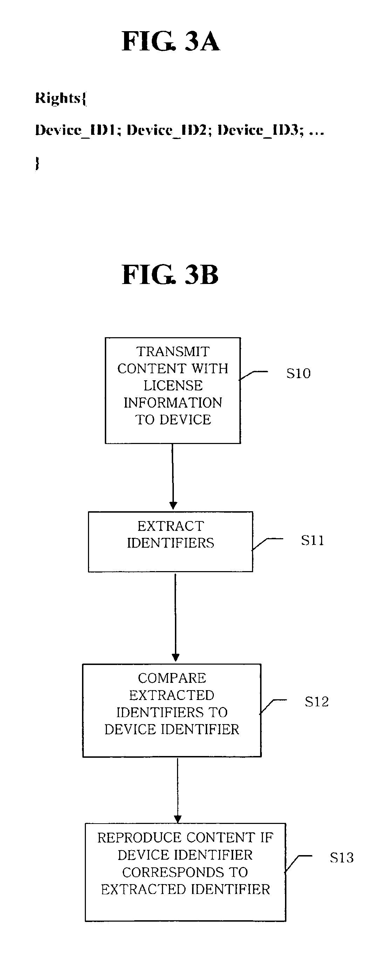

FIG. 3A is an exemplary view illustrating a description of a plurality of device identifiers in the structure of a DRM license according to an exemplary embodiment of the present invention. This corresponds to a method of describing unique identifiers for devices capable of reproducing content. Therefore, only devices corresponding to the device identifiers described in the structure of the DRM license have rights to access the content. In other words, a user having devices with a DRM function usually purchases a license structure, which has a description of reproduction details for a plurality of devices, from a license issuer. In the license structure, unique identifiers for devices that are authorized to reproduce content are described. Accordingly, if a device has an identifier corresponding to one of the device identifiers described in the license structure, the device can reproduce the relevant content. Such a method may be properly applied to the structure of a DRM license in which status values of the DRM license do not vary.

FIG. 3B is a flowchart illustrating an exemplary method of granting a DRM license by providing unique identifiers for a plurality of devices capable of reproducing content. Initially, content including license information is transmitted from a DRM server to at least one of a plurality of devices (S10). The license information includes identifiers for at least two devices capable of reproducing the content, e.g., as shown in FIG. 3A. The device extracts the identifiers included in the license information (S11) and compares the extracted identifiers to an identifier of the device (S12). If the identifier of the device corresponds to one of the extracted identifiers, the device is authorized to reproduce the content (S13).

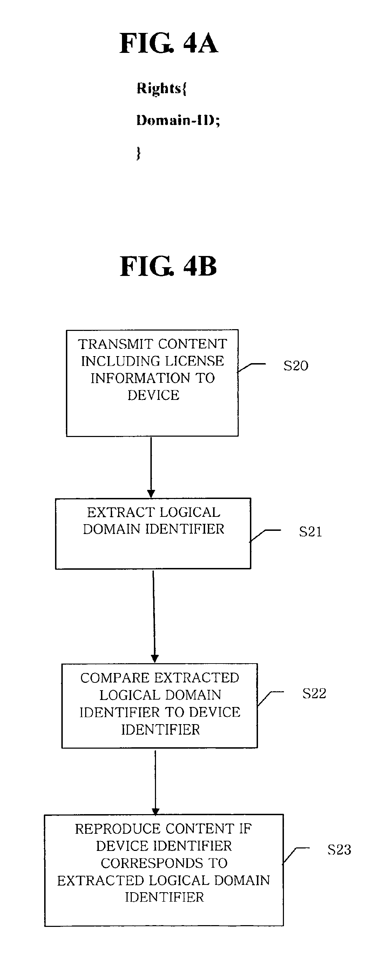

FIG. 4A is an exemplary view illustrating a description of a specific domain identifier in the structure of a DRM license according to an exemplary embodiment of the present invention. This corresponds to a method of describing a unique identifier for a specific domain incorporating devices capable of reproducing content. Therefore, only the devices that are incorporated in the domain corresponding to the domain identifier described in the structure of the DRM license have rights to access the content. Such a method may be properly applied to the structure of a DRM license in which status values of the DRM license do not vary.

The DRM license structure illustrated in FIGS. 3A or 4A may be provided by a content provider or a separate license creator and does not require installation of an additional DRM server on the user side.

FIG. 4B is a flowchart illustrating an exemplary method of granting a DRM license by providing a logical domain identifier for identifying a domain incorporating devices capable of reproducing content. Initially, content including license information is transmitted from a DRM server to at least one of a plurality of devices (S20). The license information includes an identifier for identifying a logical domain to which at least two devices capable of reproducing the content belong, e.g., as shown in FIG. 4A. The device extracts the logical domain identifier included in the license information (S21) and compares the extracted logical domain identifier to an identifier of the device (S22). If the identifier of the device corresponds to the extracted logical domain identifier, the device is authorized to reproduce the content (S23).

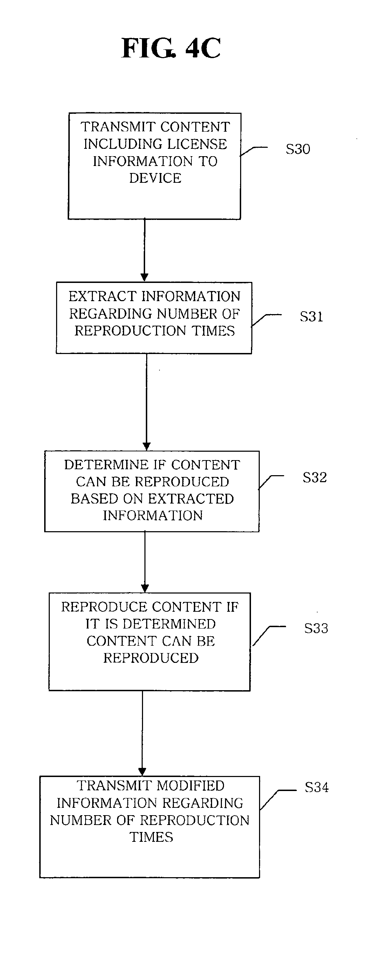

FIG. 4C is a flowchart illustrating an exemplary method of granting a DRM license by providing information regarding the number times the content can be reproduced. Initially, content including license information is transmitted from a DRM server to at least one of a plurality of devices (S30). The license information includes an information regarding a number of times the content may be reproduced. The device extracts the information regarding the number of times the content may be reproduced (S31) and determines whether the content may be reproduced based on the extracted information (S32). If device determines the content can be reproduced, the device reproduces the content (S33). The device then transmits modified/updated information regarding the number of times the content can be reproduced to other devices so that the other devices can extract the modified information and use the content if the number of uses has not been exhausted (S34).

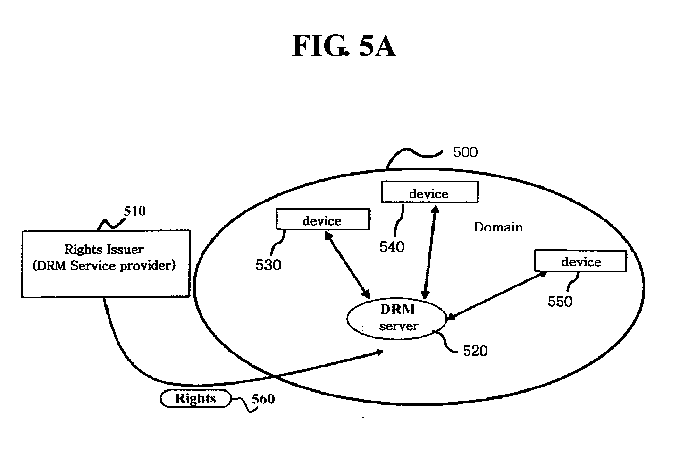

FIG. 5A is an exemplary diagram showing management of a DRM license by a DRM server, according to an exemplary embodiment of the present invention.

Specifically, an identifiable domain 500 includes a plurality of devices 530, 540 and 550 capable of reproducing content, and a DRM server 520 for managing licenses for content received from the outside. Meanwhile, a license creator (DRM service provider) 510 provides a license structure (rights) 560 for the relevant content. Alternatively, a content provider that provides the content may also provide the license structure together therewith. The DRM server 520 manages the license and license status information related thereto. Therefore, the management of DRM licenses shown in FIG. 5A can be applied regardless of whether the status values of a given license vary.

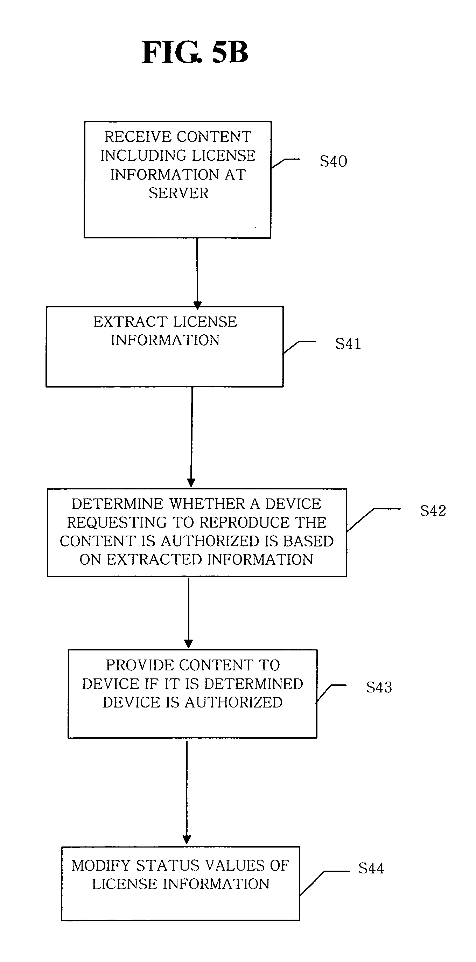

FIG. 5B is a flowchart illustrating management of a DRM license by the DRM server 520. Initially, content including license information is received by the server 520 (S40). The license information includes information regarding whether the devices 530, 540 and 550 are authorized to reproduce the content. The server 520 extracts the license information (S41) and determines whether the one of the devices 520, 530 and 540 requesting to reproduce is authorized to reproduce the content based on the extracted information (S42). If the server 520 determines the requesting device is authorized to reproduce the content, the server 520 provides the content to the device (S43) and updates the license information (S44).

For example, in the case where the license information includes domain identifier for identifying a domain incorporating devices capable of reproducing content as shown in FIG. 4A, by performing an authentication process between the DRM server 520 and the devices 530, 540 and 550, it is checked whether the devices are authorized devices belonging to the domain 500. Thereafter, the process of generating an encryption key for protecting information transmitted/received between the DRM server 520 and the devices 530, 540 and 550 is performed. Then, one of the devices requests the DRM server 520 to authorize the device to access the content. In response to the request, the DRM server 520 determines whether the device that has requested the access to the content is described in the license structure of the DRM server 520. If it is determined that the device is described therein, the device is authorized to reproduce the content, and status values of the license are then changed/updated accordingly.

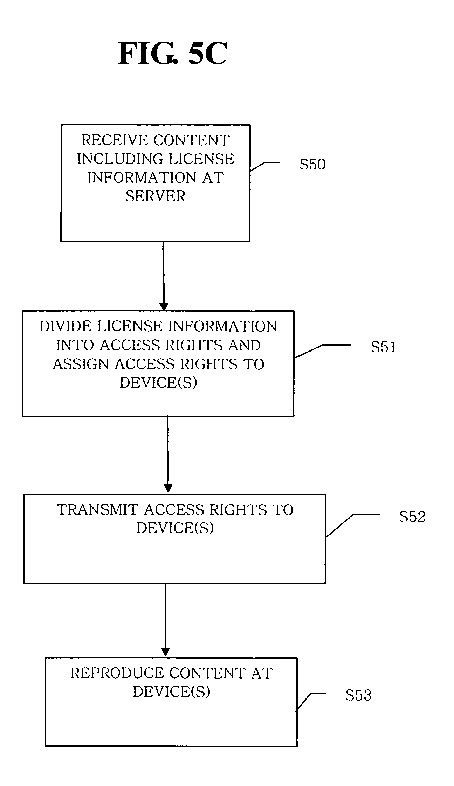

The DRM server 520 may also divide the license into respective rights constructing the license and assigns resultant rights to the devices 530, 540 and 550 that it manages such that the devices 530, 540 and 550 can then use the content within the scope of the assigned rights, respectively. As shown in FIG. 5C, the DRM server 520 receives content and license information (S50) and divides the license information into access rights which are assigned to the respective devices 530, 540 and 550 (S51). The DRM server 520 then transmits the access rights to the devices 530, 540 and 550 which reproduce the content according to the access rights (S52 and S53).

For example, if the license relates to playback time, the server 520 splits the total playback time into playback times for the respective devices and assigns the resultant playback times to the devices 530, 540 and 550. As another example, if the license relates to the number of reproduction times, the server 520 splits the total number of reproduction times into numbers of reproduction times for the respective devices, and assigns the resultant numbers of reproduction times to the devices 530, 540 and 550.

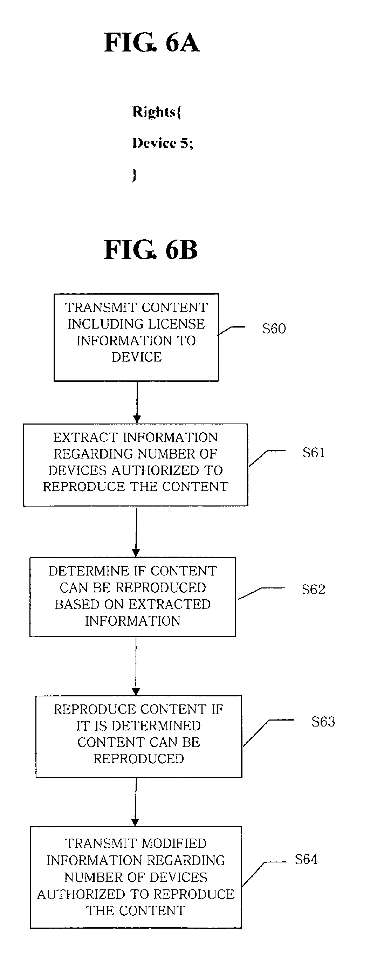

FIG. 6A is an exemplary view illustrating the structure of a DRM license for limiting the number of devices authorized to reproduce content, according to an exemplary embodiment of the present invention. Specifically, this corresponds to a method by which, without a description of identifiers of devices authorized to reproduce content in the structure of the DRM license, information regarding how many devices are authorized to reproduce the content is described and the DRM server 520 shown in FIG. 5A manages the number of the devices. FIG. 6A shows that a maximum five devices are authorized to reproduce the content. According to the method of specifying the number of devices shown in FIG. 6A, the DRM server 520 can efficiently manage a license even if unique identifiers of the devices are not specified, a new device is added, or a device is removed.

FIG. 6B is flowchart illustrating an exemplary method of granting a DRM license by transmitting information regarding the number of devices authorized to reproduce the content. Initially, content including license information is transmitted from a server to at least one of a plurality of devices (S60). The license information includes an information regarding the number of devices authorized to reproduce the content, e.g., as shown in FIG. 6A. The device extracts the information regarding the number of devices authorized to reproduce the content (S61) and determines whether the content may be reproduced based on the extracted information (S62). If device determines the content can be reproduced, the device reproduces the content (S63). The device then transmits modified/updated information regarding the number of devices which can reproduce the content to other devices so that the other devices can extract the modified information and use the content if the number of devices has not been exhausted (S64).

According to embodiments of the present invention, there is an advantage in that content can be executed through a plurality of devices using a license structure for reproducing DRM content, so that content users can more conveniently utilize the content in various DRM environments.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of granting a digital rights management license between a server and a plurality of devices, the method comprising:
transmitting (S10) content from the server to at least one device of the plurality of devices, the content comprising license information that includes identifiers for at least two devices of the plurality of devices capable of reproducing the content respectively;
extracting (S11) the identifiers included in the license information from the content received at the least one device; and
if an extracted identifier corresponds to an identifier of the at least one device, reproducing (S13) the content by the at least one device.

2. A method of granting a digital rights management license between a server and a plurality of devices, the method comprising:
transmitting (S20) content from the server to at least one device of the plurality of devices, the content comprising license information that includes an identifier for identifying a logical domain to which at two devices of the plurality of devices capable of reproducing the content belong;
extracting (S21) the identifier included in the license information from the content received by the at least one device; and
if an extracted identifier corresponds to an identifier of the logical domain to which the at least one device intending to reproduce the content belongs, reproducing (523) the content by the at least one device.

3. A method of granting a digital rights management license between a server and a plurality of devices, the method comprising:
transmitting (S30) content from the server to at least one device of the plurality of devices, the content comprising license information that includes information regarding a number of times the content can be reproduced;
extracting (S31) at the at least one device the information regarding the number of times the content can be reproduced included in the license information from the content received by the at least one device;
if it is determined from the information extracted by the at least one device that the at least one device can reproduce the content, reproducing (S33) the content by the at least one device; and
transmitting (S34) the license information including modified information regarding the number of times the content can be reproduced from the at least one device to other devices of the plurality of devices so that the other devices can extract the modified information regarding the number of reproduction times and use the content.

4. A method of granting a digital rights management license between a server and a plurality of devices, the method comprising:
transmitting (S60) content from the server to at least one device of the plurality of devices, the content comprising license information that includes information regarding a number of devices authorized to reproduce the content;
extracting (S61) the information regarding the number of devices included in the license information from the content received by the at least one device;
if it is determined from the information extracted by the at least one device that the at least one device can reproduce the content, reproducing (S63) the received content by the at least one device; and
transmitting (S64) the license information including modified information regarding the number of devices authorized to reproduce the content from the at least one device to other devices of the plurality of devices so that the other devices can extract the modified information regarding the number of devices and use the content.

5. A method of granting a digital rights management license between a server and a plurality of devices, the method comprising:
Receiving (S40) content and license information regarding the content by the server adapted to manage a logical domain to which two or more of the plurality of devices capable of reproducing the content belong;
Determining (S42) by the server whether at least one device of the plurality of devices is authorized to reproduce the content based on the license information, if the at least one device requests the content; and
Providing (S43) the content from the server to the at least one device and updating (S44) the license information at the server, if it is determined that the at least one device is authorized to reproduce the content.

6. The method as claimed in claim 5, wherein the license information comprises information regarding a number of times of the content can be reproduced.

7. The method as claimed in claim 5 or 6, wherein the license information comprises information regarding a number of devices authorized to reproduce the content.

8. The method as claimed in claim 5, 6 or 7, wherein the license information comprises information regarding a total reproduction time for which the content can be reproduced.

9. A method of granting a digital rights management license between a server and a plurality of devices, the method comprising:
receiving (S50) content and license information regarding the content by a server adapted to manage a logical domain to which the plurality of devices capable of reproducing the content belong;
dividing (S51) at the server the license information into access rights for the content and assigning the access rights to the plurality of devices which belong to the logical domain;
transmitting (S52) from the server to at least one device of the plurality of devices the access rights assigned to the at least one device and the content; and
reproducing (S53) the content at the at least one device according to the access rights.

10. The method as claimed in claim 9, wherein the license information comprises information regarding a number of times of the content can be reproduced.

11. The method as claimed in claim 9 or 10, wherein the license information comprises information regarding a number of devices authorized to reproduce the content.

12. The method as claimed in claim 9, 10 or 11, wherein the license information comprises information regarding a total reproduction time for which the content can be reproduced.
